# EUROPEAN PATENT APPLICATION

(11) **EP 1 968 227 A2**
(43) Date of publication of application: **10.09.2008**
(21) Application number: 08102121.4
(22) Date of filing: 28.02.2008
(51) Int. Cl.: H04J 14/02

(54) **Optical communication apparatus, optical communication system, and optical communication method**

(30) Priority: 05.03.2007 JP 2007054849
(71) Applicant: NEC CORPORATION, Tokyo (JP)
(72) Inventor: Ikai, Kazuhito, Tokyo (JP)
(74) Representative: Betten & Resch

(57) **Abstract**

A common unit that transmits or receives control signals is provided in an optical communication apparatus, and the control signals used in communication include different wavelengths from those of main control signals. In this way, it is possible to simplify the structure of an optical communication apparatus, and reduce the manufacturing costs thereof. An optical communication apparatus includes a plurality of main signal transmitting/receiving units and a control signal transmitting/receiving unit that transmits or receives control signals that are used to control communication in the plurality of main signal transmitting/receiving units using different wavelengths from those of the main signals transmitted/received by the main signal transmitting/receiving units.

## Description

This application is based upon and claims the benefit of priority from Japanese patent application No. 2007-054849, filed on March 5, 2007, the disclosure of which is incorporated herein in its entirety by reference.

### BACKGROUND OF THE INVENTION

### Field of the Invention

The present invention relates to an optical communication apparatus, an optical communication system, and an optical communication control method that can transmit and receive main signals, which are data intended to be transmitted or received, and control signals for transmitting and receiving the main signals to perform communication with other optical communication apparatuses.

### Description of Related Art

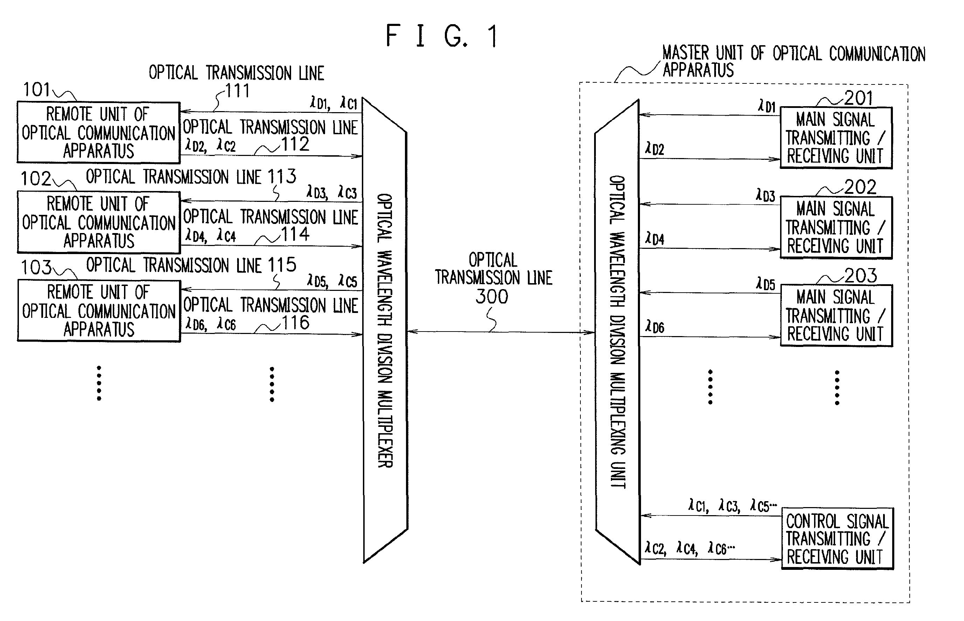

FIG. 1 is a diagram illustrating an example of a structure of a wavelength division multiplexing optical access communication system according to the related art.

In the wavelength division multiplexing optical access communication system, one master unit of an optical communication apparatus is connected to one optical transmission line, and the optical transmission line is divided into a plurality of optical transmission lines in an optical wavelength division multiplexer to be connected to a plurality of remote units of the optical communication apparatus. A remote unit 501 and the master unit of the optical communication apparatus use optical signals including a pair of optical wavelengths (λD1, λD2) to realize transmission and reception of control signals and main signals.

Further, as another example of the related art, an optical wavelength multiplexing system has been proposed in which an optical signal transmitting/receiving apparatus (center side) multiplexes control signals including information of the wavelengths of upstream and downstream optical signals that are set in a newly-installed optical signal transmitting/receiving apparatus (user side) with the downstream optical signals including each wavelength, and transmits the multiplexed signal (For example, see Patent Document 1 (Japanese Patent Application Laid-Open No. 2006-197489)).

Furthermore, as still another example of the related art, an optical wavelength filter apparatus has been proposed in which control optical signals including unit control optical signals including one or more different wavelengths are used to select the wavelengths of input optical signals including unit input optical signals including different wavelengths, and the selected optical signals are transmitted, thereby the unit input optical signals are selectively transmitted (for example, see Patent Document 2 (Japanese Patent Application Laid-Open No. 4-235533)).

Next, the problems of the related art will be described.

First, since communication between each remote unit and the master unit is independently performed, it is necessary to provide, in the master unit, control signal generating/inserting units for each remote unit connected to the optical communication apparatus.

Second, a process for electrically multiplexing the control signals with the main signals is needed.

Further, in the above-mentioned patent documents 1 and 2, it is necessary to provide a control signal transmitting/receiving unit in each main signal transmitting/receiving portion. In addition, it is not considered to simplify the structure of the control signal transmitting/receiving unit and reduce the manufacturing costs thereof.

### SUMMARY OF THE INVENTION

The invention is designed to solve above problems of the problems, and an exemplary object of the invention is to provide an optical communication apparatus, an optical communication system, and an optical communication control method capable of simplifying the structure and reducing manufacturing costs by providing a common control signal transmitting/receiving unit in the optical communication apparatus and using control signals including different wavelengths from those of main signals to perform communication.

In order to achieve the exemplary object, according to an exemplary aspect of the present invention, an optical communication apparatus includes: a plurality of main signal transmitting/receiving units; and a control signal transmitting/receiving unit that transmits or receives control signals that are used to control communication in the plurality of main signal transmitting/receiving units using different wavelengths from those of main signals transmitted/received by the main signal transmitting/receiving units.

According to another exemplary aspect of the present invention, an optical communication system includes: the optical communication apparatus according to the above-mentioned exemplary aspect; a plurality of optical communication apparatuses that can perform optical communication with the optical communication apparatus; and an optical wavelength division multiplexing unit that connects the optical communication apparatuses.

According to yet another exemplary aspect of the present invention, an optical communication control method includes: allowing a control signal processing unit, which transmits or receives control signals used for communication control, to transmit a control signal indicating a start of the communication of main signals to a wavelength tunable optical signal transmitting unit, which converts the control signals into optical signals including wavelengths defined by the control signal processing unit and outputs the optical signals; and allowing the control signal processing unit to transmit information to permit the transmission of the main signals to a wavelength fixed optical signal transmitting unit that optically outputs the main signals including a predetermined wavelength, at a predetermined timing.

### BRIEF DESCRIPTION OF THE DRAWINGS

FIG. 1 is a block diagram illustrating an example of the structure of a wavelength division multiplexing optical access communication system according to the related art of the present invention;
FIG. 2 is a block diagram schematically illustrating the structure of an optical communication system according to an exemplary embodiment of the present invention;
FIG. 3 is a block diagram illustrating the detailed structure of the system;
FIG. 4 is a block diagram illustrating wavelength characteristics of a wavelength division multiplexer when an optical communication apparatus includes four remote units;
FIG. 5 is a diagram illustrating wavelength characteristics of an optical wavelength division multiplexing unit in a master unit of the optical communication apparatus; and
FIG. 6 is a diagram illustrating an example of the correspondence relation between wavelengths used in the structure shown in FIG. 3.

### DESCRIPTION OF THE EXEMPLARY EMBODIMENTS

Hereinafter, an optical communication apparatus, an optical communication system, and an optical communication control method according to an exemplary embodiment of the present invention will be described in detail with reference to the accompanying drawings.

First, the exemplary embodiments are briefly described below.

These exemplary embodiments are characterized in that a wavelength division multiplexing optical access communication system including a wavelength division multiplexer and a wavelength tunable light source transmits control signals using a main signal communication unit with a simple structure.

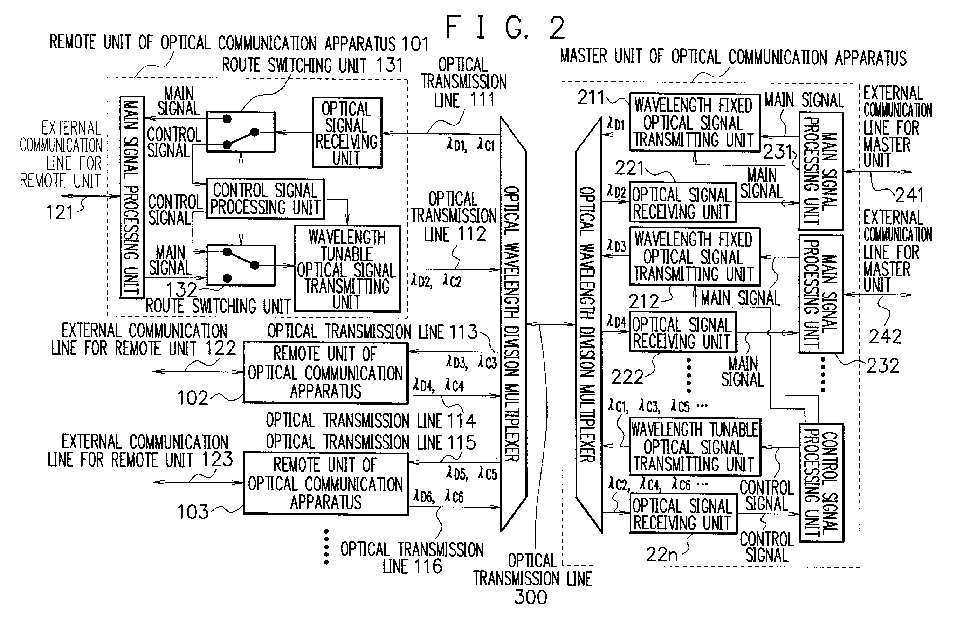

In FIG. 2, a master unit of an optical communication apparatus (optical communication apparatus) includes a plurality of main signal transmitting/receiving units and one control signal transmitting/receiving unit. A main signal transmitting/receiving unit 201 transmits an optical signal including a wavelength λD1, a main signal transmitting/receiving unit 202 transmits an optical signal including a wavelength λD3, and a main signal transmitting/receiving unit 203 transmits an optical signal including a wavelength λD5.

The control signal transmitting/receiving unit includes a wavelength tunable light source and transmits optical signals including wavelengths λC1, λC3, λC5...

An optical wavelength division multiplexing unit wavelength-multiplexes the optical signals including each wavelength transmitted from each optical signal transmitting/receiving unit and transmits the multiplexed signal to an optical transmission line 300. In addition, the optical wavelength division multiplexing unit divides the wavelength of the optical signal received from the optical transmission line 300, and transmits the optical signal including the wavelength λD2, the optical signal including the wavelength λD4, the optical signal including the wavelength λD6, and the optical signals including wavelengths λC2, λC4, and λC6 to the main signal transmitting/receiving unit 201, the main signal transmitting/receiving unit 202, the main signal transmitting/receiving unit 203, and the control signal transmitting/receiving unit, respectively.

An optical wavelength division multiplexer divides the wavelength of the optical signal received from the optical transmission line 300 and transmits the optical signals including the wavelengths λD1 and λC1, the optical signals including the wavelengths λD3 and λC3, and the optical signals including the wavelengths λD5 and λC5 to an optical transmission line 111, an optical transmission line 113, and an optical transmission line 115, respectively. Further, the optical wavelength division multiplexer wavelength-multiplexes the optical signals including the wavelengths λD2 and λC2 received from an optical transmission line 112, the optical signals including the wavelengths λD4 and λC4 received from an optical transmission line 114, and the optical signals including the wavelengths λD6 and λC6 received from an optical transmission line 116, and transmits the multiplexed signal to the optical transmission line 300.

According to this structure, the main signal transmitting/receiving unit 201 in the master unit of the optical communication apparatus (optical communication apparatus) transmits or receives the main signals including the wavelengths λD1 and λD2 to or from a remote unit (destination device) of the optical communication apparatus 101. In addition, the control signal transmitting/receiving unit in the master unit of the optical communication apparatus transmits or receives control signals including the wavelengths λC1 and λC2 to or from the remote unit of the optical communication apparatus 101.

In this way, it is possible to perform the communication between the master unit and the remote unit of the optical communication apparatus in the wavelength division multiplexing optical access communication system using optical signals including the main signals and the control signals including different wavelengths as those of the main signals, and the control signal transmitting/receiving unit in the master unit can be separately provided from the main signal transmitting/receiving units. As a result, it is possible to achieve wavelength division multiplexing optical communication capable of exchanging the control signals while simplifying the structure of the main signal processing unit.

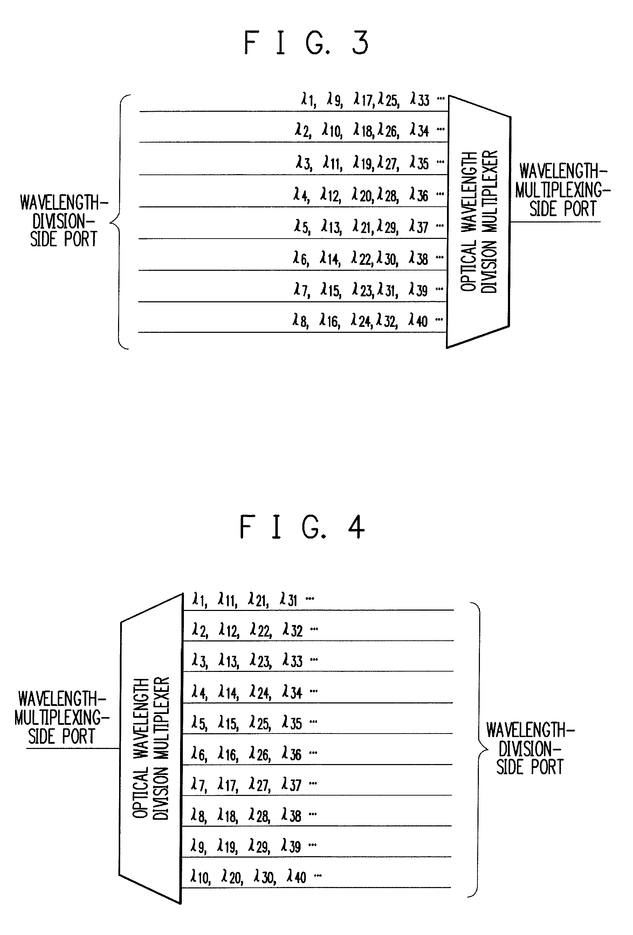

FIG. 3 is a diagram illustrating the detailed structure of the optical communication system according to the exemplary embodiment.

A control signal processing unit in the master unit of the optical communication apparatus according to the exemplary embodiment includes a function of transmitting control signals to a wavelength tunable optical signal transmitting unit and a function of controlling the wavelength tunable optical signal transmitting unit to output the wavelengths λC1, λC3, λC5···. In addition, the control signal processing unit includes a function of receiving the control signals from an optical signal receiving unit 22n.

The wavelength tunable optical signal transmitting unit converts electric control signals transmitted from the control signal processing unit into optical signals including the wavelengths λC1, λC3, λC5··· that are defined by the control signal processing unit, and transmits the optical signals to the optical wavelength division multiplexing unit.

The optical signal receiving unit 22n converts the optical signals including the wavelengths λC2, λC4, λC6... received from the wavelength division multiplexing unit into electric signals, and transmits the electric signals to the control signal processing unit.

The main signal processing unit 231 includes a function of transmitting the main signals to a wavelength fixed optical signal transmitting unit, a function of processing the main signals received from the optical signal receiving unit 221, and a function of transmitting and receiving the main signals to or from an external communication line for the master unit 241.

The wavelength fixed optical signal transmitting unit 211 converts the electric main signal received from the main signal processing unit into the optical signal including the wavelength λD1, and transmits the optical signal to the optical wavelength division multiplexing unit. In addition, the wavelength fixed optical signal transmitting unit 211 starts or stops the transmission of optical signals according to instructions from the control signal processing unit.

The optical signal receiving unit 221 converts the optical signal including the wavelength λD2 received from the optical wavelength division multiplexing unit into an electric signal, and transmits the electric signal to the main signal processing unit 231.

The optical wavelength division multiplexing unit wavelength-multiplexes the optical signals including wavelengths λD1, λD3, λD5, ···, λD(2n-1) that are respectively received from the wavelength fixed optical signal transmitting units 211, 212, 213,···, 21n and the optical signals including the wavelengths λC1, λC3, λC5··· received from the wavelength tunable optical signal transmitting unit, and transmits the multiplexed optical signal to the optical transmission line 300. In addition, the optical wavelength division multiplexing unit divides the wavelength of the optical signal received from the optical transmission line 300 to obtain the optical signals including the wavelengths λD2, λD4, λD6···, and transmits the optical signals including the wavelengths λD2, λD4, λD6... to the optical signal receiving units 221, 222, 223, ..., 220+(n-1) and the optical signal receiving unit 22n, respectively.

The optical wavelength division multiplexer divides the wavelength of the optical signal transmitted from the optical transmission line 300, and transmits the divided optical signals to the 111, 113, 115, ..., optical transmission lines 110+(2n-1). In addition, the optical wavelength division multiplexer wavelength-multiplexes the optical signals received from the 112, 114, 116, ..., optical transmission lines 110+(2n) and transmits the multiplexed optical signal to the optical transmission line 300.

The optical signal receiving unit in the remote unit (destination device) of the optical communication apparatus 101 converts the optical signals received from the optical transmission line into electric signals, and transmits the electric signals to a route switching unit 131.

The route switching unit 131 is switched according to instructions from the control signal processing unit to transmit the signal received from the optical signal receiving unit to the main signal processing unit or the control signal processing unit.

The control signal processing unit analyzes the control signal received from the route switching unit 131. In addition, the control signal processing unit controls the transmission wavelength of a transmission wavelength control unit on the basis of the analysis result. Further, the control signal processing unit transmits the control signal to a route switching unit 132, and controls the route switching of the route switching units 131 and 132.

The route switching unit 132 is switched according to instructions from the control signal switching unit to transmit the signal received from the control signal processing unit to the main signal processing unit or the control signal processing unit.

The main signal processing unit has a function of receiving the main signals from the route switching unit 131, a function of transmitting the main signals to the route switching unit 132, and a function of transmitting or receiving the main signals to or from an external communication line for the remote unit 121.

The wavelength tunable optical signal transmitting unit converts the signal received from the route switching unit 132 into an optical signal including the wavelength that is defined by the control signal processing unit, and transmits the optical signal to the optical transmission line 112.

FIG. 4 shows wavelength characteristics of the wavelength division multiplexer when four remote units including the structure shown in FIG. 3 are provided in the optical communication apparatus. A wavelength-division-side port can transmit a plurality of wavelengths.

A series of wavelengths λ1, λ2, λ3··· are arranged at wavelength intervals of λx. The following relationship is established among the wavelengths: λ2 = λ1 + 2 x λx, λ3 = λ1 + 3 x λx, λ4 = λ1 + 4 x λx··. As viewed from each wavelength-division-side port, the interval between the wavelengths transmitted is 8 x λx.

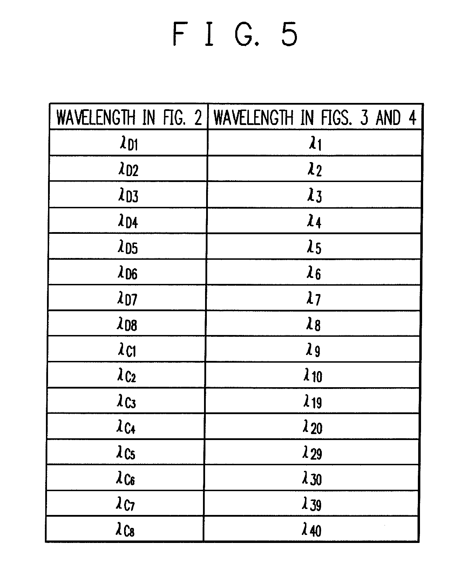

FIG. 5 shows wavelength characteristics of an optical wavelength division multiplexer that is used as the optical wavelength division multiplexing unit in the master unit of the optical communication apparatus shown in FIG. 3. A wavelength-division-side port can transmit a plurality of wavelengths.

A series of wavelengths λ1, λ2, λ3··· are arranged at wavelength intervals of λx. The following relationship is established among the wavelengths: λ2 = λ1 + 2 x λx, λ3 = λ1 + 3 x λx, λ4 = λ1 + 4 x λw···. As viewed from each wavelength-division-side port, the interval between the wavelengths transmitted is 10 x λx.

The optical wavelength division multiplexer including the wavelength characteristics shown in FIGs. 4 and 5 may be composed of an element including wavelength cycle characteristics, such as AWG (arrayed waveguide grating).

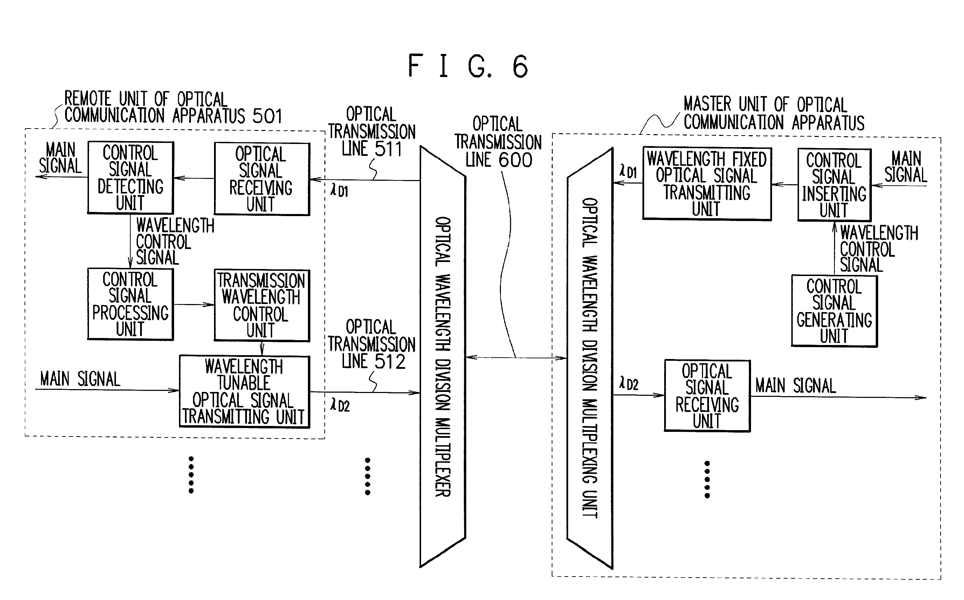

FIG. 6 is a diagram illustrating the correspondence between the wavelengths used in the structure shown in FIG. 3. When the main signal processing unit 231 in the master unit of the optical communication apparatus transmits or receives the main signals to or from the remote unit in the optical communication apparatus 101, a combination of the wavelengths λ1 and λ2 is used. When the control signal processing unit in the master unit of the optical communication apparatus communicates with the remote unit of the optical communication apparatus 101 using the control signals, a combination of wavelengths λ9 and λ10 is used.

In this way, when communication between the master unit and the remote unit of the optical communication apparatus starts, it is possible to exchange the control signals including different wavelengths from those of the main signals between the control signal processing unit in the master unit of the optical communication apparatus and the control signal processing unit in the remote unit of the optical communication apparatus. As a result, it is possible to achieve wavelength division multiplexing optical communication capable of exchanging the control signals while simplifying the structure of the main signal processing unit.

Next, the flow of a process until the communication of the main signals between the remote unit 101 and the master unit of the optical communication apparatus starts in the structure shown in FIG. 3 will be described.

The control signal processing unit in the master unit of the optical communication apparatus generates control signals including information, such as the transmission wavelengths (λD2 and λC2) of the main and controls signals for the remote unit of the optical communication apparatus 101, a coding scheme, and a transfer rate, and transmits the control signals to the wavelength tunable optical signal transmitting unit. In addition, the control signal processing unit controls the wavelength tunable optical signal transmitting unit to output a signal including the wavelength λC1. The wavelength tunable optical signal transmitting unit converts the control signal into an optical signal including the wavelength λC1, and transmits the optical signal to the wavelength division multiplexing unit.

The wavelength division multiplexing unit wavelength-multiplexes a control signal including the wavelength λC1 with another signal, and transmits the multiplexed signal to the optical transmission line 300. The optical wavelength division multiplexer divides the wavelength of the optical signal transmitted from the optical transmission line 300. The control signal including the wavelength λC1 is transmitted to the optical transmission line 111 and then received by the optical signal receiving unit in the remote unit of the optical communication apparatus 101.

The optical signal receiving unit in the remote unit of the optical communication apparatus 101 converts the received optical signal into a control signal suitable for the internal format of the remote unit of the optical communication apparatus 101, and transmits the control signal to the route switching unit 131. The route switching units 131 and 132 in the remote unit of the optical communication apparatus 101 are switched to the control signal processing unit before the communication of the main signal with the master unit of the optical communication apparatus is established. Therefore, the control signal is transmitted to the control signal processing unit.

The control signal processing unit in the remote unit of the optical communication apparatus 101 analyzes the control signal, and extracts information required for the communication of the main signal with the master unit of the optical communication apparatus, such as the transmission wavelength, a coding scheme, and a transfer speed. Then, the control signal processing unit controls the wavelength tunable optical signal transmitting unit to output the transmission wavelength λC2.

Then, the control signal processing unit in the remote unit of the optical communication apparatus 101 generates a control signal indicating that the control signals are received, and transmits the control signal to the route switching unit 132 and the wavelength tunable optical signal transmitting unit.

The wavelength tunable optical signal transmitting unit in the remote unit of the optical communication apparatus 101 converts the control signal into an optical signal including the wavelength λC2, and transmits the optical signal to the optical transmission line 112. The control signal transmitted from the optical transmission line 112 is wavelength-multiplexed with other signals by the optical wavelength division multiplexer, and the multiplexed signal is transmitted to the optical transmission line 300. Then, the signal is received by the optical wavelength division multiplexing unit in the master unit of the optical communication apparatus.

The signal received by the optical wavelength division multiplexing unit is subjected to wavelength division, and the control signal including the wavelength λC2 is transmitted to the optical signal receiving unit 22n. The optical signal receiving unit 22n converts the received control signal into a signal suitable for the internal format of the master unit of the optical communication apparatus, and transmits the signal to the control signal processing unit. The control signal processing unit analyzes the content of the signal to recognize that the remote unit of the optical communication apparatus 101 has received the control signals.

Then, the control signal processing unit generates a control signal including information indicating that the communication of the main signals with the remote unit of the optical communication apparatus 101 starts, and transmits the control signal to the wavelength tunable optical signal transmitting unit. In addition, the control signal processing unit gives the wavelength fixed optical signal transmitting unit 211 permission to transmit the main signal at the proper timing. Further, the control signal processing unit instructs the wavelength tunable optical signal transmitting unit to output the wavelength λC1.

The control signal indicating the start of the communication of the main signal is transmitted to the control signal processing unit in the remote unit of the optical communication apparatus 101 through the same path as that through which a control signal including, for example, transmission wavelength information is transmitted. The control signal processing unit receiving the control signal indicating the start of the communication of the main signal instructs the route switching units 131 and 132 to be switched to the main signal processing unit, and instructs the wavelength tunable optical signal transmitting unit to output a signal having the wavelength λD2.

Then, communication between the remote unit 101 and the master unit of the optical communication apparatus is performed using the main signals including the wavelengths λD1 and λD2.

The control signal processing unit in the master unit of the optical communication apparatus may give the wavelength fixed optical signal transmitting unit 211 permission to transmit the main signals after a proper waiting time, or it may wait for a response to the control signal from the remote unit of the optical communication apparatus 101.

The control signal processing unit in the master unit of the optical communication apparatus sequentially exchanges the control signals with the remote unit of the optical communication apparatus 102 and the subsequent remote units to establish the communication of the main signals with the remote units of the optical communication apparatus.

In the wavelength division multiplexing optical access communication system according to the related art, it is necessary to electrically multiplex the main signals and the control signals and then perform wavelength division multiplexing communication in order to exchange the control signals. For this reason, it requires a lot of time to develop a unit that electrically multiplexes the main signals and the control signals. In addition, the number of control signal processing units needs to be equal to the number of main signals to be multiplexed.

In contrast, since the above-described exemplary embodiment has an independent control signal processing unit, it is easy to design a combination of the control signal processing unit and the general-purpose main signal processing unit, and the time required for development is shortened.

Further, since the multiplexing units include a common control signal processing unit, it is unnecessary to provide the control signal processing units such that the number thereof is equal to the number of main signals to be multiplexed.

As described above, the exemplary embodiment has the following effects.

First, since one control signal processing unit is provided in the master unit of the optical communication apparatus, it is unnecessary to provide the control signal processing unit for each remote unit of the optical communication apparatus.

Second, since the main signals and the control signals are independently generated, it is not necessary to electrically multiplex the main signals with the control signals, and thus the circuit structure of each unit is simplified.

Third, since the main signal processing unit and the control signal processing unit are independently provided, it is easy to use the general-purposed main signal processing unit for other purposes.

Although the preferred exemplary embodiment of the invention has been described above, the invention is not limited thereto, but various modifications and changes of the invention can be made without departing from the technical scope and spirit of the invention.

For example, according to the exemplary embodiment, control signals including different wavelengths from those of the main signals may be transmitted at any time other than at the time of the start of the communication between the master unit and the remote unit of the optical communication apparatus. In addition, it is possible to provide a control signal communication method with high efficiency in the wavelength division multiplexing optical access communication using a wavelength division multiplexer and a wavelength tunable light source.

As described above, according to the present invention, an optical communication apparatus includes: a plurality of main signal transmitting/receiving units; and a control signal transmitting/receiving unit that transmits or receives control signals that are used to control communication in the plurality of main signal transmitting/receiving units using different wavelengths from those of main signals transmitted/received by the main signal transmitting/receiving units.

The control signal transmitting/receiving unit may preferably include: a control signal processing unit that performs processes for transmitting and receiving the control signals; and a wavelength tunable optical signal transmitting unit that converts electric control signals transmitted from the control signal processing unit into optical signals having wavelengths defined by the control signal processing unit, and outputs the converted optical signals.

Each of the main signal transmitting/receiving units may include:
a main signal processing unit that transmits or receives the main signals; and a wavelength fixed optical signal transmitting/receiving unit that converts the electric control signal transmitted from the main signal processing unit into an optical signal including a predetermined wavelength. The control signal processing unit may transmit a control signal indicating that the main signal transmitting/receiving unit starts the communication of the main signal to the wavelength tunable optical signal transmitting unit, and then transmit information to permit the transmission of the main signal from the main signal transmitting/receiving unit to the wavelength fixed optical signal transmitting unit of the main signal transmitting/receiving unit at a predetermined timing.

The control signal transmitting/receiving unit may preferably transmit, to a destination device to which the main signal transmitting/receiving unit transmits the main signals, a control signal including information of the transmission wavelengths of the main and control signals for the destination device.

According to the present invention, an optical communication system includes: the optical communication apparatus according to the above-mentioned exemplary embodiment; a plurality of optical communication apparatuses that can perform optical communication with the optical communication apparatus; and an optical wavelength division multiplexing unit that connects the optical communication apparatuses.

According to yet another exemplary embodiment of the present invention, an optical communication control method includes: allowing a control signal processing unit, which transmits or receives control signals used for communication control, to transmit a control signal indicating the start of the communication of main signals to a wavelength tunable optical signal transmitting unit, which converts the control signals into optical signals including wavelengths defined by the control signal processing unit and outputs the optical signals; and allowing the control signal processing unit to transmit information to permit the transmission of the main signals to a wavelength fixed optical signal transmitting unit that optically outputs the main signals including a predetermined wavelength, at a predetermined timing.

As described above, according to the present invention, a common unit that transmits and receives control signals is provided in the optical communication apparatus, and the control signals used in communication include different wavelengths from those of the main signals. In this way, it is possible to simplify the structure of the optical communication apparatus and reduce the manufacturing costs thereof.

In summary an embodiment of the invention can be described as follows:

A common unit that transmits or receives control signals is provided in an optical communication apparatus, and the control signals used in communication include different wavelengths from those of main control signals. In this way, it is possible to simplify the structure of an optical communication apparatus, and reduce the manufacturing costs thereof. An optical communication apparatus includes a plurality of main signal transmitting/receiving units and a control signal transmitting/receiving unit that transmits or receives control signals that are used to control communication in the plurality of main signal transmitting/receiving units using different wavelengths from those of the main signals transmitted/received by the main signal transmitting/receiving units.

## Claims

1. An optical communication apparatus comprising:
a plurality of main signal transmitting/receiving units; and
a control signal transmitting/receiving unit that transmits or receives control signals that are used to control communication in the plurality of main signal transmitting/receiving units using different wavelengths from those of main signals transmitted/received by the main signal transmitting/receiving units.

2. The optical communication apparatus according to claim 1, wherein the control signal transmitting/receiving unit includes:
a control signal processing unit that performs processes for transmitting and receiving the control signals; and
a wavelength tunable optical signal transmitting unit that converts electric control signals transmitted from the control signal processing unit into optical signals including wavelengths defined by the control signal processing unit, and outputs the converted optical signals.

3. The optical communication apparatus according to claim 2,
wherein each of the main signal transmitting/receiving units includes:
a main signal processing unit that transmits or receives the main signals; and
a wavelength fixed optical signal transmitting/receiving unit that converts the electric control signal transmitted from the main signal processing unit into an optical signal including a predetermined wavelength, and
the control signal processing unit transmits a control signal indicating that the main signal transmitting/receiving unit starts the communication of the main signal to the wavelength tunable optical signal transmitting unit, and then transmits information to permit the transmission of the main signal from the main signal transmitting/receiving unit to the wavelength fixed optical signal transmitting unit of the main signal transmitting/receiving unit at a predetermined timing.

4. The optical communication apparatus according to any of claims 1 to 3,
wherein the control signal transmitting/receiving unit transmits, to a destination device to which the main signal transmitting/receiving unit transmits the main signals, a control signal including information of the transmission wavelengths of the main and control signals for the destination device.

5. An optical communication system including:
the optical communication apparatus according to any one of claims 1 to 4;
a plurality of optical communication apparatuses that can perform optical communication with the optical communication apparatus; and
an optical wavelength division multiplexing unit that connects the optical communication apparatuses.

6. An optical communication control method, wherein a control signal processing unit transmits or receives control signals used for communication control, to transmit a control signal indicating the start of the communication of main signals to a wavelength tunable optical signal transmitting unit, which converts the control signals into optical signals including wavelengths defined by the control signal processing unit and outputs the optical signals; and the control signal processing unit transmits information to permit the transmission of the main signals to a wavelength fixed optical signal transmitting unit that optically outputs the main signals including a predetermined wavelength, at a predetermined timing.
